# EUROPEAN PATENT APPLICATION

(11) **EP 4 797 717 A1**
(43) Date of publication of application: **26.08.2026**
(21) Application number: 26158857.8
(22) Date of filing: 16.02.2026
(51) Int. Cl.: H04N 23/745

(54) **IMAGE CAPTURING APPARATUS, CONTROL METHOD THEREFOR, COMPUTER PROGRAM AND STORAGE MEDIUM**

(30) Priority: 21.02.2025 JP 2025026677
(71) Applicant: Canon Kabushiki Kaisha, Tokyo 146-8501 (JP)
(72) Inventor: YAMASHITA, Yusuke, Tokyo, 146-8501 (JP)
(74) Representative: Canon Europe Limited

(57) **Abstract**

An image capturing apparatus includes an image sensor (100) including a photoelectric conversion region (1) that photoelectrically converts an object image and outputs signal charges, a plurality of charge storage regions (6, 7, 8, and 9) that are provided for the photoelectric conversion region and are capable of storing the signal charges and outputting corresponding image capturing signals, and charge transfer regions (2, 3, 4, and 5) that transfer the signal charges from the photoelectric conversion region to the plurality of charge storage regions in a time-division manner, a changing means (CPU, S701) for changing a transfer cycle of the signal charges in the time-division manner, and a calculation means (CPU, S708) for calculating a flicker frequency of a light source by using the image capturing signals output from the respective charge storage regions based on the changed transfer cycle.

## Description

### TECHNICAL FIELD

The present disclosure relates to an image capturing apparatus including an image sensor that obtains object images and outputs the images frame by frame, a control method therefor, a computer program and a storage medium.

### BACKGROUND

There is a global shutter sensor (hereinafter referred to as a GS sensor) having memory region for each pixel of a CMOS sensor (an image sensor). A pixel of the GS sensor includes a gate that transfers signal charge stored in a photoelectric conversion region to a charge storage region. As is well known, the GS sensor basically transfers signal charges from the photoelectric conversion regions to the charge storage regions simultaneously in all the pixels, so that timings of start and end of signal storage in the photoelectric conversion regions are synchronized in all the pixels, thereby achieving a GS function.

In addition, a plurality of charge storage regions may be provided for each photoelectric conversion region. In such a case, signal charges are transferred to each charge storage region multiple times for one frame, and a plurality of images are obtained from the signal charges that have different total storage times and are transferred to the charge storage regions, thereby improving a dynamic range. Images with different dynamic ranges are obtained by changing the storage time, and one image with a high dynamic range can be generated by combining the obtained images (see US20130135486A1).

A method of detecting a flicker frequency component employed by the GS sensor is different from that of a rolling shutter sensor. Although the rolling shutter sensor calculates the frequency by detecting a luminance difference between lines, the luminance difference between the lines does not occur in the GS sensor. Japanese Patent Laid-Open Publication No. 2014-232972 (Counterpart of US20140354847A1) discloses a method for detecting high-frequency flicker components by means of a GS sensor.

### SUMMARY

However, the image capturing apparatus disclosed in JP2014-232972A needs to heighten a speed of an electronic shutter as the frequency of the light source heightens. The higher the speed of the electronic shutter is , the lower an image capturing signal is, and therefore, a detection accuracy deteriorates. Further, the image capturing apparatus disclosed in JP2014-232972A detects a difference image between frames, but since temporal centroids are different between frames, the detection accuracy of high-frequency flicker is poor, and there is a possibility of erroneous detection when a moving object is present.

The present disclosure provides an image capturing apparatus and a control method therefor, a computer program and a storage medium, which are capable of detecting a flicker frequency without deteriorating a detection accuracy even when a frequency of a light source heightens.

The present disclosure in its first aspect provides an image capturing apparatus as specified in claim 1. Optional features of the first aspect are specified in claims 2 to 7. These optional features of the first aspect are also optional features of the other aspects of the present disclosure.

The present disclosure in its second aspect provides a control method as specified in claim 8. Optional features of the second aspect are specified in claims 9 to 14. These optional features of the second aspect are also optional features of the other aspects of the present disclosure.

The present disclosure in its third aspect provides a computer program as specified in claim 15. The present disclosure in its fourth aspect provides a computer-readable data carrier having stored thereon the computer program of claim 15.

According to the present disclosure, it is possible to obtain an effect that the flicker frequency can be detected without deteriorating the detection accuracy even when the frequency of the light source heightens. Features of the present disclosure will become apparent from the following description of embodiments with reference to the attached drawings. The following description of embodiments is described by way of example.

### BRIEF DESCRIPTION OF THE DRAWINGS

FIG. 1 is a block diagram illustrating a configuration of an image sensor according to a first embodiment.
FIG. 2 is a configuration diagram illustrating a first equivalent circuit of the image sensor according to the first embodiment.
FIG. 3 is a timing chart of the first equivalent circuit according to the first embodiment.
FIG. 4 is a timing chart of the first equivalent circuit according to the first embodiment.
FIG. 5 is a configuration diagram illustrating a second equivalent circuit of the image sensor according to the first embodiment.
FIG. 6 is a timing chart of the second equivalent circuit according to the first embodiment.
FIG. 7 is a timing chart of the second equivalent circuit according to the first embodiment.
FIG. 8 is a timing chart of a light source and the image sensor according to the first embodiment.
FIG. 9 is a timing chart of the light source and the image sensor according to the first embodiment .
FIG. 10 is a flowchart illustrating a flicker frequency detection process according to the first embodiment.
FIG. 11 is an explanatory view of a frequency detection area according to a second embodiment.
FIG. 12 is a flowchart illustrating a flicker detection process according to the second embodiment.

### DESCRIPTION OF THE EMBODIMENTS

Hereinafter, embodiments of the present invention will be described in detail with reference to the drawings. However, the configurations described in the following embodiments are merely examples, and the scope of the present disclosure is not limited by the configurations described in the embodiments.

### First Embodiment

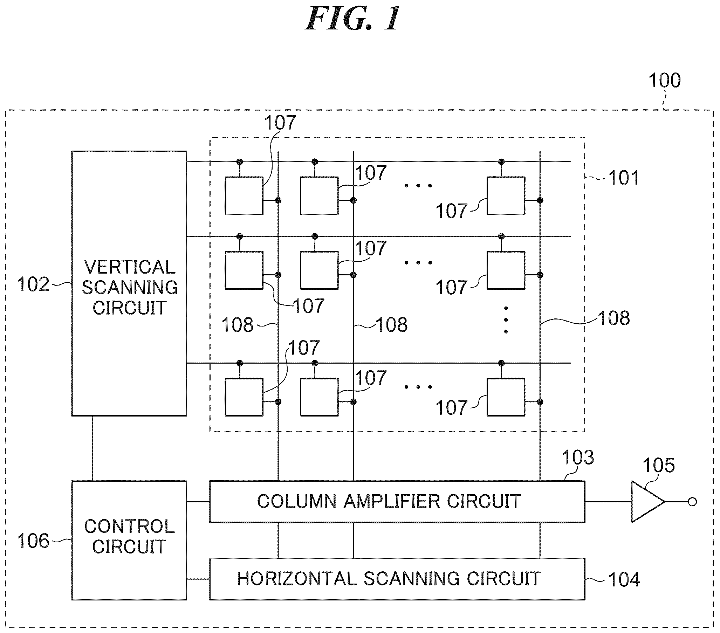

FIG. 1 is a block diagram illustrating a configuration of an image sensor according to an embodiment of the present disclosure. The image sensor 100 includes a pixel area 101, a vertical scanning circuit 102, a column amplifier circuit 103, a horizontal scanning circuit 104, an output circuit 105, and a control circuit 106. The pixel area 101 is a pixel array including a plurality of pixels 107 arranged in a two-dimensional matrix having multiple rows and multiple columns in a plan view. The vertical scanning circuit 102 supplies control signals to a plurality of transistors included in the pixels 107 via signal lines in a horizontal direction (column direction), and controls ON (conductive state) and OFF (nonconductive state) of these transistors.

A column signal line 108 is provided for each column of the pixels 107, and signals from the pixels 107 are read to the column signal line 108 for each column. The column amplifier circuit 103 amplifies the pixel signal output to the column signal line 108, and performs processes, such as a correlated double sampling process based on a signal in resetting the pixel 107 and a signal in photoelectric conversion. The horizontal scanning circuit 104 supplies a control signal to a switch connected to an amplifier (not illustrated) of the column amplifier circuit 103, and controls ON/OFF of the switch.

The control circuit 106 controls the operations of the vertical scanning circuit 102, the column amplifier circuit 103, and the horizontal scanning circuit 104. The output circuit 105 includes a buffer amplifier, a differential amplifier, and the like (not illustrated), and outputs the pixel signal from the column amplifier circuit 103 to a signal processor outside the image sensor. Note that the image sensor 100 may be configured to output a digital pixel signal by providing an AD converter in the image sensor 100.

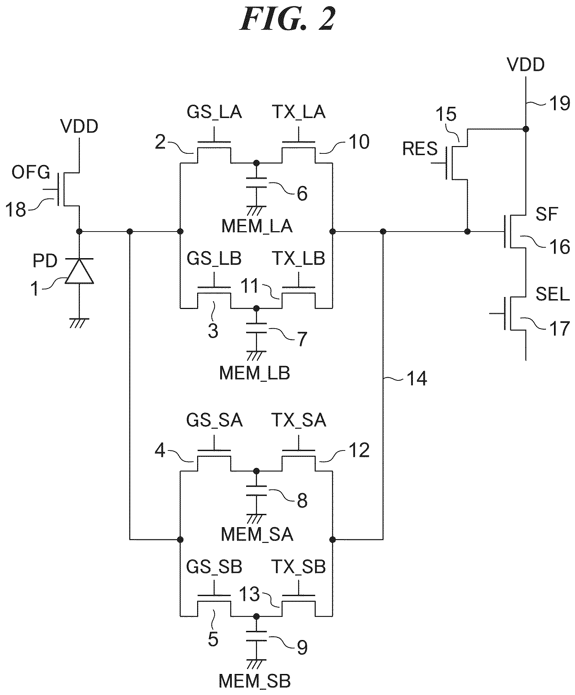

FIG. 2 is a configuration diagram illustrating a first equivalent circuit of the image sensor according to the present embodiment. A PD 1 is a photodiode as an example of a photoelectric conversion region. A GS_LA 2, a GS_LB 3, a GS_SA 4, and a GS_SB 5 are switching elements like FETs as charge transfer regions and can transfer signal charges generated in the photoelectric conversion region PD 1 to a downstream circuit element. Further, a MEM_LA 6, a MEM_LB 7, a MEM_SA 8, and a MEM_SB 9 are capacitors as charge storage regions and can hold signal charges generated by the photoelectric conversion region. Further, a TX_LA 10, a TX_LB 11, a TX_SA 12, and a TX_SB 13 are switching elements like FETs as transfer regions and can transfer the signal charges held by the upstream charge storage regions to a downstream circuit element.

An FD 14 is an input node of an amplifier described later and can hold signal charges transferred from the upstream charge storage region via a transfer region. The FD 14 can use a floating diffusion area disposed on a semiconductor substrate. A RES 15 is a reset region configured to supply a reference voltage to the FD 14 as the input node of the amplifier. The RES 15 is implemented by a switching device such as an FET. An SF 16 is an amplifier and can amplify a signal based on the signal charge transferred to the FD area and output the signal to outside. In the example in FIG. 2, the SF 16 forms a source follower circuit using a MOS transistor. The SF 16 can be implemented by a configuration in which the gate of the MOS transistor is electrically connected to the floating diffusion area. Although the TX_LA 10, TX_LB 11, TX_SA 12, and TX_SB 13 as the transfer regions share the FD 14 as the input node and the SF 16 as the amplifier in the example in FIG. 2, the circuit may be configured not to share them.

An SEL 17 is a selection region that is configured to select pixels and output signal charges to outside for each pixel column or each pixel row. An OFG 18 is a charge drain controller that can drain the charge of the photoelectric conversion region PD 1. In the example in FIG. 2, a semiconductor area that constitutes a part of the photoelectric conversion region and has the same polarity as that of the signal charge is configured as a source, and a semiconductor area (overflow drain area (OFD area)) to which a power source voltage VDD 19 is supplied is configured as a drain. Each of the transfer region, the reset region, the selection region, and the charge drain controller can be configured using a switching region such as a MOS transistor.

When the charge transfer region GS_LA 2 is turned ON, the signal charge generated by the photoelectric conversion region PD 1 is transferred to the charge storage region MEM_LA 6. When the charge transfer region GS_LB 3 is turned ON, the signal charge generated by the photoelectric conversion region PD 1 is transferred to the charge storage region MEM_LB 7. When the charge transfer region GS_SA 4 is turned ON, the signal charge generated by the photoelectric conversion region PD 1 is transferred to the charge storage region MEM_SA 8. When the charge transfer region GS_SB 5 is turned ON, the signal charge generated by the photoelectric conversion region PD 1 is transferred to the charge storage region MEM_SB 9.

When the charge transfer region TX_LA 10 is turned ON, the signal charge held by the charge storage region MEM_LA 6 is transferred to the FD 14. When the charge transfer region TX_LB 11 is turned ON, the signal charge held by the charge storage region MEM_LB 7 is transferred to the FD 14. When the charge transfer region TX_SA 12 is turned ON, the signal charge held by the charge storage region MEM_SA 8 is transferred to the FD 14. When the charge transfer region TX_SB 13 is turned ON, the signal charge held by the charge storage region MEM_SB 9 is transferred to the FD 14.

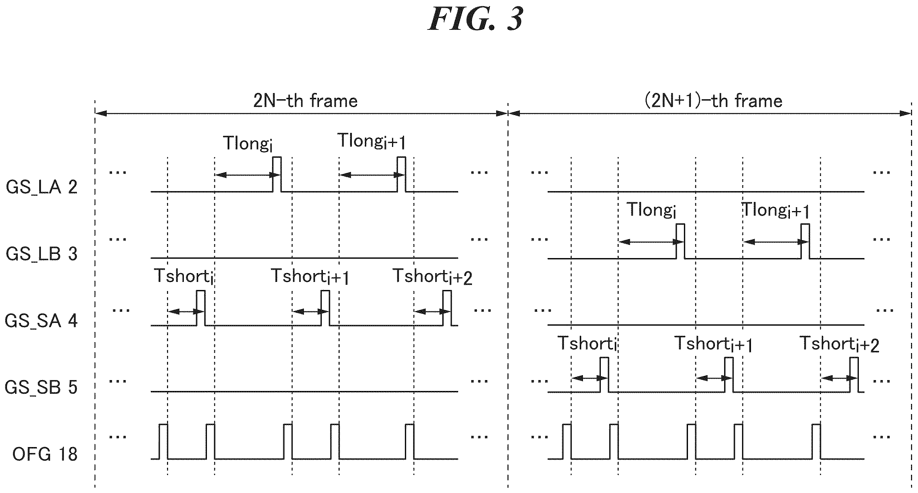

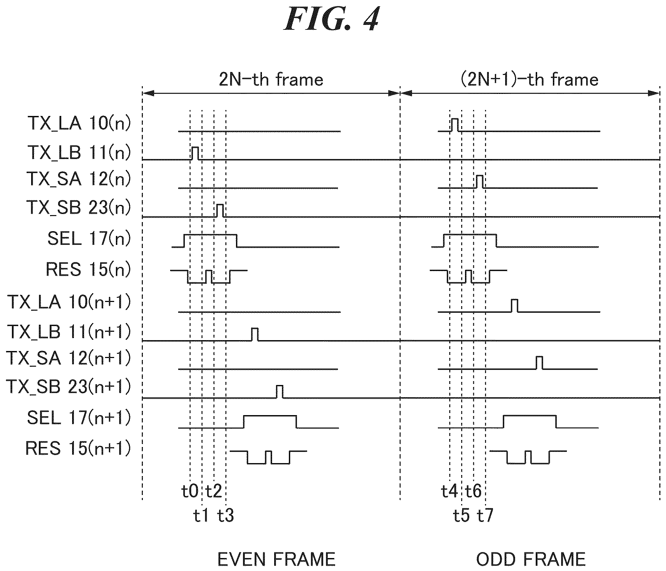

Next, a driving method of the image sensor according to the embodiment of the present disclosure will be described with reference to FIG. 3 and FIG. 4. FIG. 3 and FIG. 4 illustrate time-series transitions of drive pulses supplied to control electrodes and transfer electrodes in FIG. 2. FIG. 3 shows driving related to an exposure, and FIG. 4 shows driving related to reading. In the figure, a subscript "n" denotes a row number of a pixel. The subscripts of the control lines indicate "n-th row" and "(n + 1)-th row". Although the two rows are described here, it is possible to cope with a case where a plurality of rows are further included by repeating the drive patterns shown in FIG. 3 and FIG. 4. Since the image capturing apparatus employs the global shutter sensor, the drive timing for the driving related to exposure is the same in all the rows. Therefore, the subscripts and the notation of the plurality of rows are not given. A high active method is employed, and a region becomes active at a high level (High). Since the driving related to readout, the transfer regions TX_LA 10, TX_LB 11, TX_SA 12, and TX_SB 13, the selection region SEL 17, and the reset region RES 15 have different drive timings depending on the row, the subscripts and the notation of the plurality of rows are used.

Hereinafter, the description will be made with reference to FIG. 3. In an even frame (2N-th frame), the signal charges generated in the photoelectric conversion region PD 1 are stored in the charge storage regions MEM_LA6 and MEM_SA8, and the signal charges in the charge storage regions MEM_LB 7 and MEM_SB 9 are read out. During a certain period within one frame, photons incident on the photoelectric conversion region PD 1 are photoelectrically converted into signal charges. The signal charges are stored in the photoelectric conversion region PD 1 and are transferred to one of the charge storage regions MEM_LA 6 and MEM_SA 8. When the charge transfer region GS_LA 2 is turned ON, the signal charges are transferred to the charge storage region MEM_LA 6. When the charge transfer region GS_SA 4 is turned ON, the signal charges are transferred to the charge storage region MEM_SA 8. The charge transfer driving is performed a plurality of times in one frame.

In FIG. 3, "Tshortᵢ" indicates storage time of signal charges of "i-th" charge transfer among "Nshort" times of charge transfers repeated in the "2N-th frame". The "Nshort" indicates the total number of frames for the image capturing signal output from the charge storage region MEM_SA 8 among the total number of even frames. A time period T1 is required from a timing when the charge drain controller OFG 18 is turned ON and the photoelectric conversion region PD 1 is reset to a timing when the charge transfer region GS_SA 4 is turned ON. Subsequently, a time period from the transfer of the generated signal charges from the photoelectric conversion region PD 1 to the charge storage region MEM_SA 8 to the turning OFF of the charge transfer region GS_SA 4 is denoted by "T2". The storage time of the "i-th" signal charge corresponds to "T1 + T2".

Although the photoelectric conversion region PD 1 is reset by the charge drain controller OFG 18 in the present embodiment, the reset by the charge drain controller OFG 18 may be omitted in a case where no signal charge remains in the photoelectric conversion region PD 1 in transfer. In this case, the storage time "Tshortᵢ" corresponds to a time from a timing when the previous transfer driving is completed to a timing when the charge transfer region GS_SA 4 is turned OFF. The storage time "Tshort" of the signal charge stored in the charge storage region MEM_SA 8 is a time obtained by adding "Tshortᵢ" from i = 1 to i = Nshort. The storage time "Tshortᵢ" of the signal charge may be the same or different from i = 1 to i = Nshort.

In FIG. 3, "Tlongᵢ" indicates storage time of the "i-th" charge transfer of the signal charges among "Nlong" times of charge transfers repeated in the "2N-th frame". The "Nlong" is the total number of frames for the image capturing signal output from the charge storage region MEM_LA 6 among the even frames. A time "T3" is required from a timing when the charge drain controller OFG 18 is turned ON and the photoelectric conversion region PD 1 is reset to a timing when the charge storage region GS_LA 2 is turned ON. Subsequently, a time period from the transfer of the generated signal charges from the photoelectric conversion region PD 1 to the charge storage region MEM_LA 6 to the turning OFF of the charge transfer region GS_LA 2 is denoted by "T4". The storage time of the "i-th" signal charge corresponds to "T3 + T4".

Although the photoelectric conversion region PD 1 is reset by the charge drain controller OFG 18 in the present embodiment, the reset by the charge drain controller OFG 18 may be omitted in a case where no signal charge remains in the photoelectric conversion region PD 1 in transfer. In this case, the storage time "Tshortᵢ" corresponds to a time from a timing when the previous transfer driving is completed to a timing when the charge transfer region GS_SA 4 is turned OFF. The storage time "Tlong" of the signal charge stored in the charge storage region MEM_LA 6 is a time obtained by adding "Tlongᵢ" from i = 1 to i = Nlong. The storage time "Tlongᵢ" of the signal charge may be the same or different from i = 1 to i = Nlong.

In this manner, in the even frame, the charge transfer region GS_LA 2 and the charge transfer region GS_SA 4 are alternately turned ON. A time period Tlongᵢ from a reference timing at which the OFG 18 turns ON to a timing at which the charge transfer region GS_LA 2 starts turning ON is relatively long. And a time period Tshortᵢ from the reference timing at which the OFG 18 turns ON to a timing at which the charge transfer region GS_SA 4 starts turning ON is relatively short. As a result, the signal charges are transferred in a time-division manner in the circuit in FIG. 2.

Next, signal readout in an even frame (2N-th frame) in FIG. 4 will be described. Hereinafter, the description will be made with reference to FIG. 4. Here, the signal charges stored in the charge storage regions MEM_LB 7 and MEM_SB 9 in the previous frame ((2N-1)-th frame: not shown) are read. The signal readout from an "n-th row" in sequential reading from each row will be described.

First, SEL 17 (n) is turned ON to read a signal of the FD 14 of a pixel in the n-th row. In response to this, RES 15 (n) that resets the FD 14 when turning ON is turned OFF, and a reset level voltage VRES of the FD 14 is read at a time t0. Next, when the transfer region TX_LB 11 (n) is turned ON, the signal charge held by the charge storage region MEM_LB 7 is transferred to the FD 14, and the signal level VSIG of the FD 14 is read at a time t1.

The difference |VSIG-VRES| between the two signal levels is a physical quantity proportional to the signal charge amount of the charge storage region MEM_LB 7. When RES 15 (n) is turned ON again, the FD 14 is reset, and the reset level voltage VRES of the FD14 is read at a time t2. Next, the transfer region TX_SB 13 (n) is turned ON, the signal charge held by the charge storage region MEM_SB 9 is transferred to the FD 14, and the signal level VSIG of the FD 14 is read at a time t3. The difference |VSIG-VRES| between the two signal levels is a physical quantity proportional to the signal charge amount of the charge storage region MEM_SB 9. When this operation is sequentially repeated for the entire area or a desired area row by row, the signals stored in the charge storage regions MEM_LB 7 and MEM_SB 9 can be obtained as an image.

Hereinafter, the description will be made with reference to FIG. 3 in particular. In an odd frame ((2N+1)-th frame), the signal charges generated in the photoelectric conversion region PD 1 are stored in the charge storage regions MEM_LB 7 and MEM_SB 9, and the signal charges in the charge storage regions MEM_LA6 and MEM_SA 8 are read. During a certain period within one frame, photons incident on the photoelectric conversion region PD 1 are photoelectrically converted into signal charges. The signal charges are stored in the photoelectric conversion region PD 1 and are transferred to one of the charge storage regions MEM_LB 7 and MEM_SB 9.

When the charge transfer region GS_LB 3 is turned ON, the charge signal is transferred to the charge storage region MEM_LB 7. When the charge transfer region GS_SB 5 is turned ON, the charge signal is transferred to the charge storage region MEM_SB 9. The charge transfer driving is performed a plurality of times in one frame.

The drive timings of the charge transfer regions GS_LB 3 and GS_SB 5 and the charge drain controller OFG 18 in the odd frame ((2N+1)-th frame) may be identical to those in the even frame (2N-th frame). That is, the drive timings in the odd frame may be identical to the drive timings of the charge transfer regions GS_LA 2 and GS_SA 4 and the charge drain controller OFG 18 in the even frame.

In this manner, the charge transfer region GS_LB 3 and the charge transfer region GS_SB 5 are alternately turned ON even in the odd frame. A time period Tlong; from a reference timing at which the OFG 18 turns ON to a timing at which the charge transfer region GS_LB 3 starts turning ON is relatively long. And a time period Tshortᵢ from the reference timing at which the OFG 18 turns ON to a timing at which the charge transfer region GS_SB 5 starts turning ON is relatively short. As a result, the signal charges are transferred in a time-division manner in the circuit in FIG. 2.

The signal readout in the odd frame ((2N+1)-th frame) in FIG. 4 will be described. Here, in the previous frame (2N-th frame), the signal charges stored in the charge storage regions MEM_LA 6 and MEM_SA 8 are read. The signal readout from an "n-th row" in sequential reading from row by row will be described. The SEL 17 (n) is turned on, and the signal of the FD 14 of a pixel of the n-th row is read. In response to this, RES 15 (n) that resets the FD 14 when turning ON is turned OFF, and a reset level voltage VRES of the FD 14 is read at a time t4.

Next, when the transfer region TX_LA 10 (n) is turned ON, the signal charge held in the charge storage region MEM_LA6 is transferred to the FD 14, and the signal level VSIG of the FD 14 is read at a time t5. The difference |VSIG-VRES| between the two signal levels is a physical quantity proportional to the amount of the signal charge in MEM_LA 6. When RES 15 (n) is turned ON again, the FD 14 is reset and the reset level voltage VRES of the FD 14 is read at a time t6.

Next, the transfer region TX_SA 12 (n) is turned ON, the signal charge held in the charge storage region MEM_SA8 is transferred to the FD 14, and the signal level VSIG of the FD 14 is read at a time t7. The difference |VSIG-VRES| between the two signal levels is a physical quantity proportional to the amount of signal charge in the charge storage region MEM_SA 8. When this operation is sequentially repeated for the entire area or a desired area, the signals stored in the charge storage regions MEM_LA 6 and MEM_SA 8 can be obtained as an image.

The storage time "Tlong" and the storage time "Tshort" may be different from each other. This enables to obtain two types of images having different effective exposure amounts in the same frame. For example, when one image is formed while using the signal of one of the two types of images to correct the storage time, one image with a high dynamic range can be obtained.

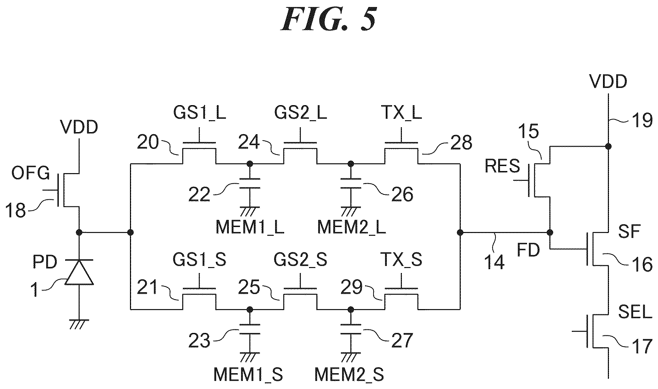

FIG. 5 is a configuration diagram illustrating a second equivalent circuit of the image sensor according to the present embodiment. The second equivalent circuit is different from the first equivalent circuit in that two charge storage regions (22 and 26 or 23 and 27) are connected in series between the photoelectric conversion region PD 1 and the FD 14. The first equivalent circuit has four transfer regions connected to the FD 14. On the other hand, the second equivalent circuit has only two transfer regions connected to the FD 14, and thus the capacitance of the FD 14 can be reduced, and a circuit configuration having noise resistance is obtained.

A GS1_L 20, a GS2_L 24, a GS1_S 21, and a GS2_S 25 are four switching elements like FETs as charge transfer regions. A charge transfer region is configured to be able to transfer a signal charge generated by the photoelectric conversion region PD 1 to a downstream circuit element. A MEM1_L 22, a MEM2_L 26, a MEM1_S 23, and a MEM2_S 27 are four capacitors as charge storage regions. A charge storage region is configured to be able to hold a signal charge generated by the photoelectric conversion region. A TX_L 28 and a TX_S 29 are transfer regions. A transfer region is configured to be able to transfer a signal charge held by an upstream charge storage region to a downstream circuit element.

The FD 14, the reset region RES 15, the amplifier SF 16, the selection region SEL 17, the charge drain controller OFG 18, and the power source voltage VDD 19 in the second equivalent circuit illustrated in FIG. 5 are the same as those in FIG. 2. Therefore, the description thereof will be omitted to avoid duplication.

When the charge transfer region GS1_L 20 is turned ON, the signal charge generated by the photoelectric conversion region PD 1 is transferred to the charge storage region MEM1_L 22. When the charge transfer region GS2_L 24 is turned ON, the signal charge held by the charge storage area MEM1_L 22 is transferred to the charge storage area MEM2_L 26. When the charge transfer region GS1_S 21 is turned ON, the signal charge generated by the photoelectric conversion region PD 1 is transferred to the charge storage region MEM1_S 23. When the charge transfer region GS2_S 25 is turned ON, the signal charge held by the charge storage region MEM1_S 23 is transferred to the charge storage region MEM2_S 27.

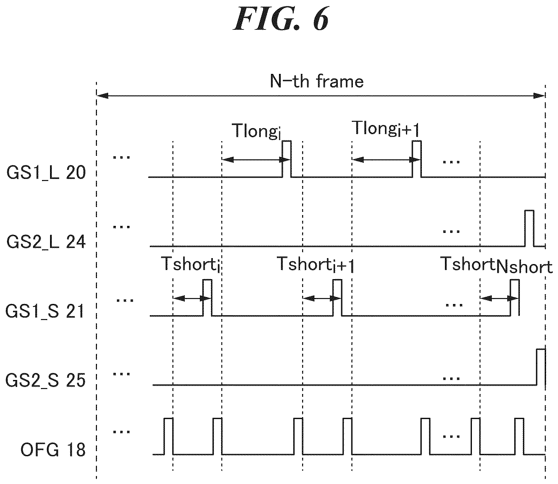

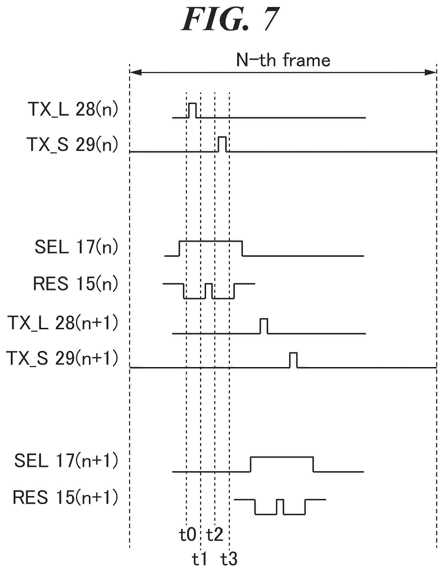

Next, a method of driving the image sensor in the second equivalent circuit will be described with reference to FIG. 6 and FIG. 7. FIG. 6 shows driving related to an exposure, and FIG. 7 shows driving related to reading. A subscript "n" denotes a row number of a pixel. The subscripts of the control lines indicate "n-th row" and "(n+1)-th row". Although the two rows are described here, it is possible to cope with a case where a plurality of rows are further included by repeating the drive patterns shown in FIG. 6 and FIG. 7. Since the image capturing apparatus employs the global shutter sensor, the drive timing for the driving related to exposure is the same in all the rows. Therefore, the subscripts and the notation of the plurality of rows are not given. A high active method is employed, and an element becomes active at a high level (High).

Although the even frame and the odd frame are illustrated in FIG. 3 and FIG. 4 for the first equivalent circuit, only one frame is illustrated for the second equivalent circuit because the driving is not changed between the even frame and the odd frame.

The signal charges generated by the photoelectric conversion region PD 1 are stored in the charge storage regions MEM1_L 22 and MEM1_S 23, and the signal charges in the charge storage areas MEM2_L 26 and MEM2_S 27 are read. During a certain period within one frame, photons incident on the photoelectric conversion region PD 1 are photoelectrically converted into signal charges. The signal charges are stored in the photoelectric conversion region PD 1 and are transferred to one of the charge storage regions MEM1_L 22 and MEM1_S 23. When the charge transfer region GS1_L 20 is turned ON, the signal charges are transferred to the charge storage region MEM1_L 22. When the charge transfer region GS1_S 21 is turned ON, the signal charges are transferred to the charge storage region MEM1_S 23. The charge transfer driving can be performed a plurality of times in one frame.

In FIG. 6, "Tshorti" indicates storage time of signal charges of "i-th" charge transfer among "Nshort" times of charge transfers repeated in the "N-th frame". A time period T5 is required from a timing when the charge drain controller OFG 18 is turned ON and the photoelectric conversion region PD 1 is reset to a timing when the charge transfer region GS1_S 21 is turned ON. Subsequently, a time period from the transfer of the generated signal charges from the photoelectric conversion region PD 1 to the charge storage region MEM1_S 23 to the turning OFF of the charge transfer region GS1_S 21 is denoted by "T6". The storage time of the "i-th" signal charge corresponds to "T5 + T6". The storage time "Tshort" of the signal charge stored in the charge storage region MEM1_S 23 is a time obtained by adding "Tshortᵢ" from i = 1 to i = Nshort.

In FIG. 6, "Tlongi" indicates storage time of the "i-th" charge transfer of the signal charges among "Nlong" times of charge transfers repeated in the "N-th frame". A time period T7 is required from a timing when the charge drain controller OFG 18 is turned ON and the photoelectric conversion region PD 1 is reset to a timing when the charge transfer region GS1_L 20 is turned ON. Subsequently, a time period from the transfer of the generated signal charges from the photoelectric conversion region PD 1 to the charge storage region MEM1_L 22 to the turning OFF of the charge transfer region GS1_L 20 is denoted by "T8". The storage time of the "i-th" signal charge corresponds to "T7 + T8". The storage time "Tlong" of the signal charge stored in the charge storage region MEM1_L 22 is a time obtained by adding "Tlongᵢ" from i = 1 to i = Nlong.

When the last charge transfer in the "N-th frame" is completed, that is, when the "Nshort"-th charge transfer is completed in FIG. 6, the charge in the charge storage region MEM1_S 23 can be transferred to the downstream charge storage region MEM2_S 27. At this time, it is assumed that the signal charges obtained in the "(N-1)-th frame" as the previous frame and held in the charge storage region MEM2_S 27 have been read out in all the rows. The charge transfer region GS2_S 25 is turned ON, and the signal charge is transferred from the charge storage region MEM1_S 23 to the charge storage area MEM2_S 27.

Similarly, the charge transfer region GS2_L 24 is turned ON, and the signal charge is transferred from the charge storage region MEM1_L 22 to the charge storage region MEM2_L 26. As a result, the charge storage regions MEM1_S 23 and MEM1_L 22 become empty, and thus, they become possible to store signal charges in the next frame again. Although the charge transfer regions GS2_S 21 and GS2_L 24 are turned ON at different timings in FIG. 6, they may be turned ON at the same timing.

In this way, in the second equivalent circuit, the charge transfer region GS1_L 20 and the charge transfer region GS _ S 21 are alternately turned ON. A time period Tlongᵢ from a reference timing at which the OFG 18 turns ON to a timing at which the charge transfer region GS1_L 20 starts turning ON is relatively long. And a time period Tshortᵢ from the reference timing to a timing at which the charge transfer region GS1_S 21 starts turning ON is relatively short. As a result, the signal charges are transferred in a time-division manner in the circuit in FIG. 5.

The signal readout in the "N-th frame" will be described with reference to FIG. 7. Here, the signal charges stored in the charge storage regions MEM2_L 26 and MEM2_S 27 in the previous frame ((N-1)-th frame) are read. The signal readout from an "n-th row" in sequential reading from row by row will be described. First, SEL 17 (n) is turned ON to read a signal of the FD 14 of a pixel in the n-th row. In response to this, RES 15 (n) that resets the FD 14 when turning ON is turned OFF, and a reset level voltage VRES of the FD 14 is read at a time t0.

Next, the transfer region TX_LB 28 (n) is turned ON, the signal charge held by the charge storage region MEM2_L 26 is transferred to the FD 14, and the signal level VSIG of the FD 14 is read at a time t1. The difference |VSIG-VRES| between the two signal levels is a physical quantity proportional to the signal charge amount of the charge storage region MEM2_L 26. When RES 15 (n) is turned ON again, the FD 14 is reset, and the reset level voltage VRES of the FD 14 is read at a time t2.

Next, the transfer region TX_S 29 (n) is turned ON, the signal charge held by the charge storage region MEM2_S 27 is transferred to the FD 14, and the signal level VSIG of the FD 14 is read at a time t3. The difference |VSIG-VRES| between the two signal levels is a physical quantity proportional to the signal charge amount of the charge storage region MEM2_S 27. When this operation is sequentially repeated for the entire area or a desired area row by row, the signals stored in the charge storage regions MEM2_L 26 and MEM2_S 27 can be obtained as an image.

As described above, two charge storage regions for storing transferred signal charges are provided for one photoelectric conversion region PD 1, and these two charge storage regions hold the charges until signals of a next frame are read. The charge transfer region transfers the signal charges from the photoelectric conversion region PD 1 to the two charge storage regions in a time-division manner. With this configuration, it is possible to seamlessly obtain a moving image with a high dynamic range without including a blank time area in which moving image cannot be obtained. Further, three or more charge storage regions for storing transferred signal charges may be provided for one photoelectric conversion region PD 1.

The image capturing apparatus including the image sensor having the configuration shown in FIG. 2 or FIG. 5 can be configured. The image capturing apparatus includes an optical system that forms an object image on the image sensor, a processor to apply various processes to an image capturing signal (image signal) output from the image sensor, a display unit that displays a captured image, an operation unit that receives user operations about various settings, a mechanism to control exposure, and the like. Examples of the other mechanisms include, but are not limited to, a shutter, a diaphragm mechanism, and an AF mechanism. An example of the various processes includes an image process, but this is not limited. The image capturing apparatus includes a CPU, a RAM, a ROM, a nonvolatile memory, and the like that can execute various software processes. The image capturing apparatus can further mount other components, processing units, mechanisms, and the like according to the specifications.

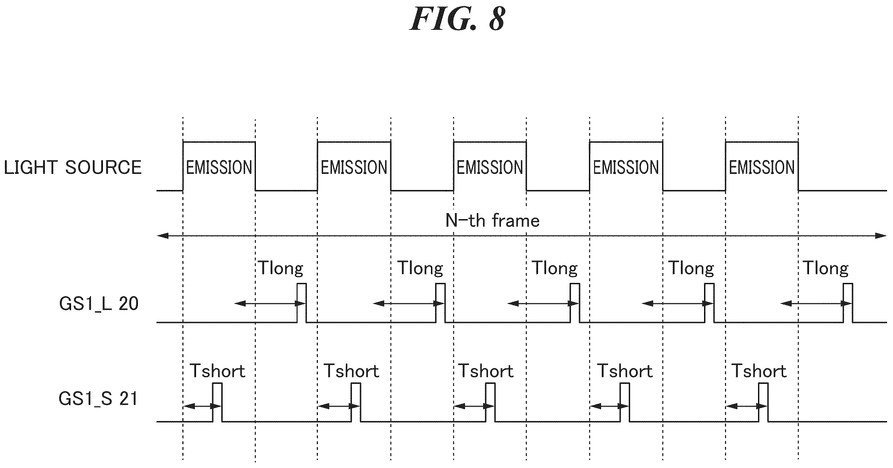

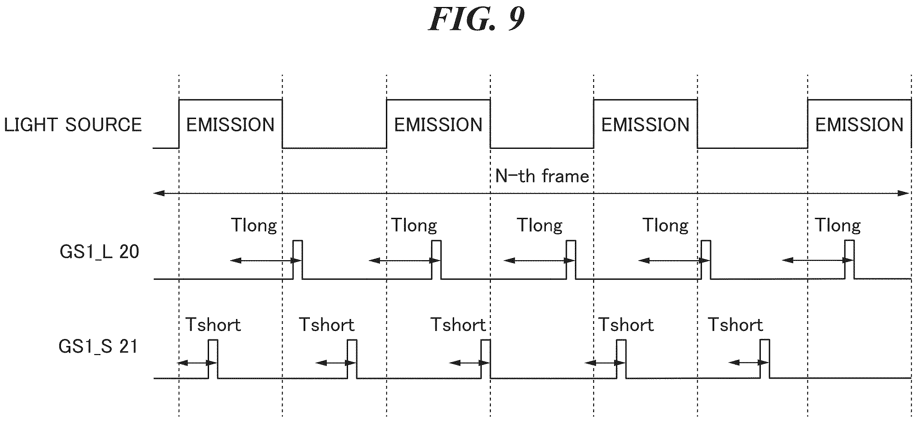

FIG. 8 and FIG. 9 are timing charts showing relationships between light emission timings of a light source under PWM control (pulse width modulation control) and storage times of the second equivalent circuit in FIG. 5. FIG. 8 shows an example in which a light emission cycle of the light source matches a cycle in which the charge transfer regions GS1_L 20 and GS1_S 21 repeat ON.

When a light source has no cyclic pattern about light emission, the ratio of sensitivities of the charge storage regions MEM1_L 22 and MEM1_S 23 is "Tlong : Tshort". However, under the condition in FIG. 8, the signal charge is stored in the charge storage region MEM1_S 23, but the signal charge is not stored in the charge storage region MEM1_L 22. The reason is that the charge transfer region GS1_L 20 is not turned ON during the light emission of the light source.

Therefore, the ratio of sensitivities of the charge storage regions MEM1_L 22 and MEM1_S 23 does not satisfy the relationship "Tlong : Tshort", and greatly deviates from the relationship. This is the same in a case where a multiplication of the light emission cycle of the light source matches a cycle in which the charge transfer regions GS1_L 20 and GS1_S 21 repeat ON.

FIG. 9 is a timing chart of an example in which the light emission cycle of the light source does not match the cycle in which the charge transfer regions GS1_L 20 and GS1_S 21 repeat ON. In FIG. 9, various conditions, such as a condition under which no signal charge is stored in the charge storage region MEM1_S 23 and a condition under which no signal charge is stored in the charge storage region MEM1_L 22, are repeated in one frame period. Therefore, the ratio of the sensitivities of charge storage regions MEM1_L 22 and MEM1_S 23 substantially matches the relationship "Tlong : Tshort". That is, since there are ON durations of the charge transfer regions GS1_L 20 and GS1_S 21 during the light emission of the light source subjected to the PWM control, the ratio of sensitivities substantially matches the relationship "Tlong : Tshort".

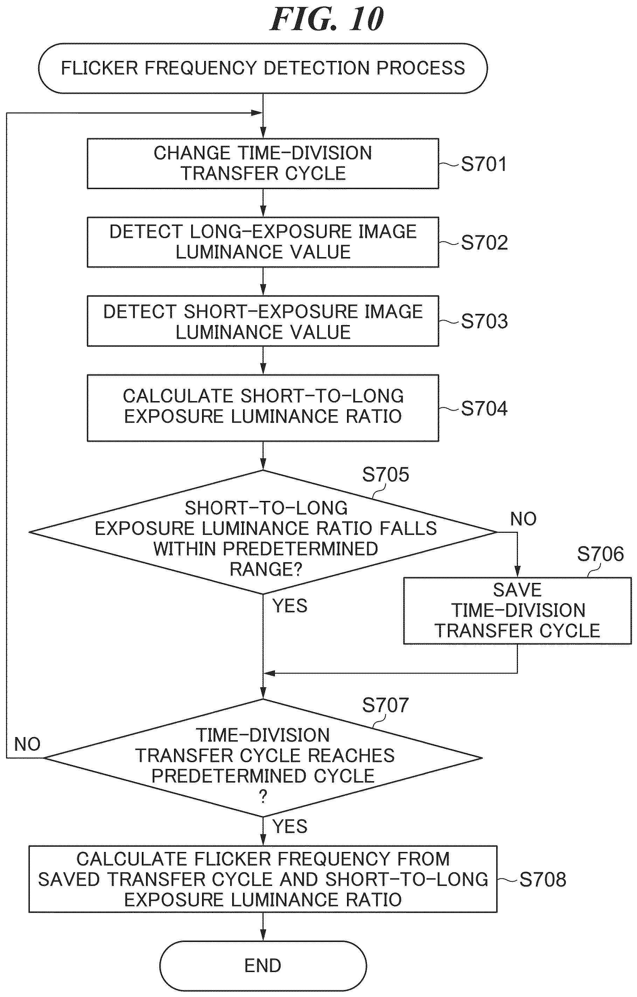

The present embodiment is characterized in that the flicker frequency of the light source is estimated by using the above-described characteristics. FIG. 10 is a flowchart illustrating a process in which the image capturing apparatus including the image sensor according to the embodiment of the present disclosure detects flicker. In addition, an image capturing signal generated by a signal output from the charge storage region MEM1_L 22 in the second equivalent circuit of the image capturing apparatus is defined as a long-exposure image (first image), and an image capturing signal generated by a signal output from the charge storage region MEM1_S 23 is defined as a short-exposure image (second image). Further, a cycle obtained by adding a "Tlong duration" and a "Tshort duration" is defined as a time-division transfer cycle. The long-exposure image is an image capturing signal from the charge storage region having a relatively long storage time, and the short-exposure image is an image capturing signal from the charge storage region having a relatively short storage time. That is, "long exposure" and "short exposure" correspond to the exposure durations of the photoelectric conversion region PD 1. Since an exposure duration of a signal of the charge storage region MEM1_L 22 is longer than that of the charge storage area MEM1_S 23, the image capturing signal generated from the signal output from the MEM1_L 22 is defined as a long-exposure image. On the other hand, the image capturing signal generated from a signal output from the charge storage region MEM1_S 23 is defined as a short-exposure image.

Hereinafter, a calculation process of a flicker frequency will be described with reference to FIG. 10. Each process in FIG. 10 is achieved by the CPU included in the above-described image capturing apparatus reading a program stored in the ROM, developing the program onto the RAM, and executing the program. Hereinafter, it is assumed that the CPU executes the process.

When detecting start of a flicker detection mode, the CPU as a changing means first executes a process of changing a transfer cycle of signal charges in the time-division manner in a step S701. Hereinafter, the transfer cycle of signal charges in the time-division manner is referred to as a time-division transfer cycle. For example, the CPU sends a control signal to the control circuit 106, and the control circuit 106 that has received the control signal changes the transfer cycle by controlling operations of the switching elements of the vertical scanning circuit 102. In the present embodiment, a case where the operation is started from the shortest transfer period of signal charges in the time-division manner (referred to as the shortest time-division transfer cycle) will be described. That is, the CPU changes the transfer cycle of the signal charges in the time-division manner in the image sensor 100 from the shortest time-division transfer cycle toward the longest transfer cycle of the signal charges in the time-division manner (referred to as the longest time-division transfer cycle) every time the step S701 is performed.

Next, in a step S702, the CPU detects a luminance value of the long-exposure image that is the image capturing signal generated from the signal output from the charge storage region MEM1_L 22. Next, in a step S703, the CPU detects a luminance value of the short-exposure image that is the image capturing signal generated from the signal output from the charge storage region MEM1_S 23. Next, in a step S704, the CPU calculates a luminance ratio between the short-exposure image and the long-exposure image (a short-to-long exposure luminance ratio). At this time, it is ideal that the luminance ratio "the short-exposure image luminance value / the long-exposure image luminance value" is equal to "Tshort/Tlong".

Next, in a step S705, the CPU determines whether the ratio of the luminance values calculated in the step S704 falls within a predetermined range. For example, an arbitrary threshold equal to or less than "Tshort/Tlong" is defined as a threshold A, and an arbitrary threshold more than "Tshort/Tlong" is defined as a threshold B. In this case, when the CPU determines that the luminance ratio calculated in the step S704 falls within the range sandwiched between the threshold A and the threshold B (Yes), the CPU proceeds with the process to a step S707. On the other hand, when the CPU determines that the luminance ratio calculated in the step S704 does not fall within the range between the threshold A and the threshold B (No), the CPU proceeds with the process to a step S706. That is, when the light source does not change a light emission amount over time, a ratio A of the signal levels of charge storage regions MEMx_L and MEMx_S (x = 1, 2) is equal to "TLong:Tshort". However, when the light source changes a light emission amount, for example, the light source repeats periodic blinking over time such as shown in FIG. 8, and when the blinking cycle of the light source matches the time-division transfer cycle, the signal level ratio is not equal to "Tlong:Tshort". That is, the luminance ratio does not fall within the predetermined range ("No" in the step S705), and the CPU obtains the flicker frequency by detecting this state.

In the step S706, the CPU saves the time-division transfer cycle and the short-to-long exposure luminance ratio in the nonvolatile memory such as a flash memory, because the time-division transfer cycle at that time may be close to the frequency of the light sources.

Next, in the step S707, the CPU determines whether the time-division transfer cycle reaches a predetermined cycle. Here, the predetermined cycle is defined as the longest transfer cycle of the signal charge in the time division manner that can be set for one frame period. When determining that the time-division transfer cycle does not reach the predetermined cycle (NO), the CPU returns the process to the step S701, increases the value of the time-division transfer cycle, and executes the process from the step S702. On the other hand, when determining that the time-division transfer cycle reaches the longest time-division transfer cycle in the step S707 (YES), the CPU proceeds with the process to a step S708. When the CPU returns the process to the step S701, the time-division transfer cycle is lengthened in the step S701, and the process from the step S702 is repeated.

Then, in a step 708, the CPU as a calculation means calculates the flicker frequency of the light source from the time-division transfer cycle and the short-to-long exposure luminance ratio saved in the step S706. For example, the CPU estimates the shortest cycle, in other words, the highest frequency, among one or more time-division transfer cycle in which the luminance ratio falls within the predetermined range as a frequency close to the frequency of the light source. As described above, the CPU calculates the frequency of the flicker (flicker frequency) of the light source using the image capturing signal output from each charge storage region based on the changed transfer cycle. The flicker frequency is calculated based on the result of determining whether the ratio of the luminance values of the short-exposure image and the long-exposure image, which are different images obtained by time division, falls within the predetermined range.

The luminance level can be detected by executing the above process without shortening the storage time even when using a high-frequency light source, and therefore, the flicker frequency of the light source can be detected without deteriorating the detection accuracy. Although the frequency of the light source is detected by executing the process once for a certain time-division transfer cycle within the range between the shortest time-division transfer period and the longest time-division transfer cycle in the process shown in FIG. 10, the detection accuracy may be improved by executing the process shown in FIG. 10 multiple times.

### Second Embodiment

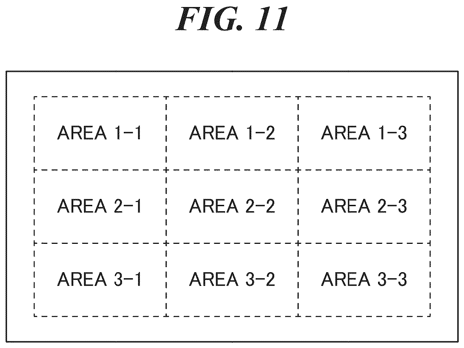

Next, a second embodiment according to the present disclosure will be described. Since the image sensor 100 according to the present embodiment is the same as that in the first embodiment, the schematic configuration, the equivalent circuit, and the like thereof will not be described. FIG. 11 is an explanatory view showing a state in which the flicker detection area is divided when flicker detection is performed in the short-exposure image or the long-exposure image. As shown in FIG. 11, an image corresponding to one frame includes nine areas from an area 1-1 to an area 3-3 and flicker is detected in each area. Although the process using one flicker detection area has been described in first embodiment, a process using a plurality of flicker detection areas will be described in the second embodiment.

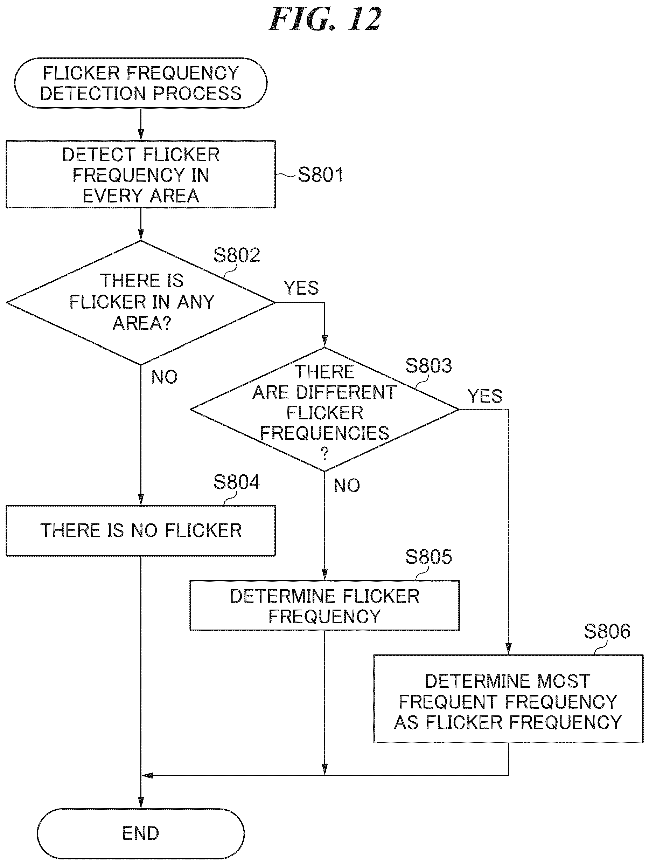

FIG. 12 is a flowchart illustrating a flicker detection process of an image capturing apparatus of the second embodiment. Hereinafter, a process to detect one flicker frequency from an image capturing signal will be described with reference to FIG. 12.

When detecting that the flicker detection mode is started, the CPU first executes a process of detecting a flicker frequency of every area shown in FIG. 11 in a step S801. The process in the step S801 is the flicker frequency detection process described in FIG. 10.

Next, in a step S802, the CPU determines whether there is flicker in each area. When determining that there is no flicker in any areas (NO), the CPU proceeds with the process to a step S804, determines that there is no flicker in the step S804, and ends the process. This is a case where the CPU does not detect flicker in any of the nine areas 1-1 to 3-3 shown in FIG. 11. On the other hand, when determining that there is flicker detected in any of the areas in the step S802 (YES), the CPU proceeds with the process to a step S803. This is a case where the CPU detects flicker in any one of the nine areas 1-1 to 3-3 shown in FIG. 11. Hereinafter, the area in which flicker is detected (the region where the flicker component is present) is referred to as a presence area.

Next, in the step S803, the CPU compares the flicker frequencies in the presence areas, and determines whether there are a plurality of different frequencies. When determining that the flicker frequencies of all the presence areas are identical (NO), the CPU proceeds with the process to a step S805. On the other hand, when the CPU compares the flicker frequencies in the presence areas and determines that there are different flicker frequencies in the presence areas (YES), the CPU proceeds with the process to a step S806.

Then, the CPU determines the detected identical frequency as the flicker frequency in the step S805, and ends the process. The CPU determines the most frequent frequency among the different frequencies in the presence areas as the flicker frequency in the step S806, and ends the process. As described above, the CPU performs the following determination through the process in the steps S801, S802, S803, S805, and S806. That is, the CPU determines the presence or absence of the flicker detected for each of the plurality of areas into which one image is divided (S801). And when determining that any of the areas is the presence area (YES in S802), the CPU determines the flicker frequency based on the flicker frequency of each presence area.

More specifically, the CPU compares the flicker frequencies in the respective presence areas, and when it is determined that there are different frequencies in the existence areas, the most frequent frequency is determined as the flicker frequency (S806). On the other hand, the CPU compares the flicker frequencies in the respective presence areas, and when it is determined that the frequencies in all the presence areas are identical, the CPU determines the identical frequency as the flicker frequency (S805). For example, it is assumed that all of the areas 1-1 to 3-3 are the presence areas. In this assumed example, when it is determined that the frequencies in all the areas 1-1 to 3-3 are identical and are "f0", the frequency "f0" is determined as the flicker frequency. On the other hand, when the frequency in the three areas 1-1 to 1-3 is "f1" and the frequency in the six areas 2-1 to 3-3 is "f2 (f1≠f2)", the flicker frequency is "f2". This is because the number of the presence areas of "f2" is more than the number of the presence areas of "f1", and the frequency "f2" is the most frequent frequency in the presence areas.

Thus, the flicker frequency can be detected by executing the process shown in FIG. 12 while focusing on the areas in which the flicker is present. The most frequent frequency among the flicker frequencies detected for the divided areas is determined as the flicker frequency. Therefore, the detection accuracy is improved as compared with the first embodiment.

Although the preferred embodiments of the present invention have been described above, the present invention is not limited to the above-described embodiments, and various modifications and changes can be made within the scope of the gist of the present invention. For example, the present disclosure can be achieved by supplying a program that achieves one or more functions of the above-described embodiments to a system or an apparatus via a network or a storage medium, and a processor of a computer of the system or the apparatus reading and executing the program. The present disclosure can also be achieved by a hardware circuit (for example, an ASIC) that achieves the one or more functions.

## Claims

1. An image capturing apparatus comprising:
an image sensor (100) including a photoelectric conversion region (1) configured to photoelectrically convert an object image and output signal charges, a plurality of charge storage regions (6, 7, 8, and 9) that are provided for the photoelectric conversion region and are capable of storing the signal charges and outputting corresponding image capturing signals, and charge transfer regions (2, 3, 4, and 5) configured to transfer the signal charges from the photoelectric conversion region to the plurality of charge storage regions in a time-division manner;
a changing means (CPU, S701) configured to change a transfer cycle of the signal charges in the time-division manner;
a calculation means (CPU, S708) configured to calculate a flicker frequency of a light source by using the image capturing signals output from the respective charge storage regions based on the changed transfer cycle.

2. The image capturing apparatus according to claim 1, wherein the calculation means is configured to calculate the flicker frequency based on a result of determining whether a ratio of luminance values of a first image and a second image, which are different images obtained by time division, falls within a predetermined range.

3. The image capturing apparatus according to claim 2, wherein the calculation means is configured to determine the flicker frequency of the light source based on one or more time-division transfer cycles for which the luminance ratio falls within the predetermined range.

4. The image capturing apparatus according to claim 1, wherein the calculation means is configured to calculate a flicker frequency for each area of a plurality of areas into which an image based on the image capturing signals output from the plurality of charge storage regions is divided.

5. The image capturing apparatus according to claim 4, wherein the calculation means is configured to determine, for each area whether flicker is present, identify presence areas, and base the flicker frequency of the light source on the flicker frequencies of the presence areas.

6. The image capturing apparatus according to claim 4 or 5, wherein the calculation means is configured to calculate the flicker frequency in the image based on the flicker frequencies detected in the plurality of areas into which the image is divided.

7. The image capturing apparatus according to claim 4 or 5, wherein the calculation means is configured to determine a most frequent frequency among flicker frequencies detected in the plurality of areas into which the image is divided as the flicker frequency in the image.

8. A control method for an image capturing apparatus including an image sensor (100) including a photoelectric conversion region (1) that photoelectrically converts an object image and outputs signal charges, a plurality of charge storage regions (6, 7, 8, and 9) that are provided for the photoelectric conversion region and are capable of storing the signal charges and outputting corresponding image capturing signals, and charge transfer regions (2, 3, 4, and 5) that transfer the signal charges from the photoelectric conversion region to the plurality of charge storage regions in a time-division manner, the control method comprising:
a changing step (S701) of changing a transfer cycle of the signal charges in the time-division manner;
a calculation step (S708) of calculating a flicker frequency of a light source by using the image capturing signals output from the respective charge storage regions based on the changed transfer cycle.

9. The control method according to claim 8, wherein the calculation step calculates the flicker frequency based on a result of determining whether a ratio of luminance values of a first image and a second image, which are different images obtained by time division, falls within a predetermined range.

10. The control method according to claim 9, wherein the calculation step determines the flicker frequency of the light source based on one or more time-division transfer cycles for which the luminance ratio falls within the predetermined range.

11. The control method according to claim 8, wherein the calculation step calculates a flicker frequency for each area of a plurality of areas into which an image based on the image capturing signals output from the plurality of charge storage regions is divided.

12. The control method according to claim 11, wherein the calculation step determines, for each area whether flicker is present, identifies presence areas, and bases the flicker frequency of the light source on the flicker frequencies of the presence areas.

13. The control method according to claim 11 or 12, wherein the calculation step calculates the flicker frequency in the image based on the flicker frequencies detected in the plurality of areas into which the image is divided.

14. The control method according to claim 11 or 12, wherein the calculation step determines a most frequent frequency among flicker frequencies detected in the plurality of areas into which the image is divided as the flicker frequency in the image.

15. A computer program comprising instructions which, when the program is executed by an image capturing apparatus, cause the image capturing apparatus to carry out the method of any one of claims 8 to 14.
